**Europäisches Patentamt**

**European Patent Office**

**Office européen des brevets**

(19)

(11) Publication number : **0 443 550 B1**

(12) # EUROPEAN PATENT SPECIFICATION

(45) Date of publication of patent specification :
**20.07.94 Bulletin 94/29**

(51) Int. Cl.[5] : **F16D 69/02**

(21) Application number : **91102451.1**

(22) Date of filing : **20.02.91**

(54) **Asbestos-free brake lining.**

(30) Priority : **20.02.90 JP 40269/90**
      **30.11.90 JP 339463/90**

(43) Date of publication of application :
      **28.08.91 Bulletin 91/35**

(45) Publication of the grant of the patent :
      **20.07.94 Bulletin 94/29**

(84) Designated Contracting States :
      **DE ES FR GB IT**

(56) References cited :
      **EP-A- 0 050 377**
      **EP-A- 0 183 335**
      **EP-A- 0 250 615**
      **DE-A- 1 425 261**
      **DE-A- 2 708 488**
      **DE-A- 2 752 230**
      **DE-B- 2 144 367**

(73) Proprietor : **SUMITOMO ELECTRIC**
      **INDUSTRIES, LTD.**
      **5-33, Kitahama 4-chome,**
      **Chuo-ku**
      **Osaka-shi, Osaka 541 (JP)**

(72) Inventor : **Nakagawa, Mitsuhiko**
      **c/o Itami Works Sumitomo Electric Industries,**
      **Ltd.**
      **1-1, Koyakita 1-chome, Itami-Shi, Hyogo (JP)**
      Inventor : **Ibuki, Masanori**
      **c/o Itami Works Sumitomo Electric Industries,**
      **Ltd.**
      **1-1, Koyakita 1-chome, Itami-Shi, Hyogo (JP)**
      Inventor : **Kishimoto, Hiroya**
      **c/o Itami Works Sumitomo Electric Industries,**
      **Ltd.**
      **1-1, Koyakita 1-chome, Itami-Shi, Hyogo (JP)**
      Inventor : **Yamashita, Yukinori**
      **c/o Itami Works Sumitomo Electric Industries,**
      **Ltd.**
      **1-1, Koyakita 1-chome, Itami-Shi, Hyogo (JP)**

(74) Representative : **Herrmann-Trentepohl,**
      **Werner, Dipl.-Ing. et al**
      **Patentanwälte Herrmann-Trentepohl,**
      **Kirschner, Grosse, Bockhorni & Partner**
      **Forstenrieder Allee 59**
      **D-81476 München (DE)**

## Description

BACKGROUND OF THE INVENTION

Field of the Invention

The present invention relates to a brake lining for a vehicle such as an automobile or a friction brake lining for an industrial machine, and more particularly, it relates to an asbestos-free brake lining which can prevent occurrence of a low-frequency brake noise.

Description of the Background Art

An asbestos lining, which is mainly composed of asbestos, has generally been applied to a brake for an automobile or the like. However, it has recently been discussed that asbestos exerts a harmful influence on the human body. To this end, there has been developed the so-called asbestos-free lining, which contains no asbestos, to take the place of the asbestos lining.

The asbestos-free lining has been implemented by a semi-metallic lining with steel short fiber. Such a semi-metallic lining is obtained by adding large amounts of a graphite lubricant and metal powder to steel fiber, which serves as a reinforcing material, and hot-forming the mixture with a binder of phenol resin. In performance, the semi-metallic lining is excellent in wear resistance and fading resistance.

However, it has been pointed out that such a semi-metallic lining ignites in a braking operation when it has been heated to high temperature because of frequent braking operations, and the steel short fiber, which is contained in the lining, causes significant wear of a counter-rotor. In the existing circumstances, therefore, an asbestos-free lining is implemented by a low-steel lining which contains steel in the minimum required amount, or a non-steel lining which contains absolutely no steel.

The low-steel and non-steel linings can solve the aforementioned problems of ignition in a high-temperature braking operation and wear of a counter-rotor, which have been caused in the semi-metallic lining. However, the low-steel and non-steel linings are liable to cause low-frequency brake noises of not more than 1 KHz, as compared with the conventional asbestos lining. In an extreme case, the car body may vibrate in a braking operation, to give an extremely unpleasant feeling to the driver etc.

EP 0 050 377 describes an asbestos-free brake lining providing low wear of the lining and the counter-rotor as well as high retardation values, wherein the material consists of 5 - 25 Wt % of a binder material, 1 - 70 Wt % reinforcing material and other additives, the reinforcing material comprising 7,5 - 12 Wt % aramid fiber, 6 - 25 Wt. % mineral fiber and 16 - 36 Wt % steel fiber.

EP 0 250 615 describes a lining for a friction coupling, wherein the lining comprises mineral or organic fiber as well as auxiliary material. As auxiliary material 1 - 15 Wt % of talc is added to the bulk material.

Summary of the invention

An object of the present invention is to provide an asbestosfree brake lining, which can prevent occurance of a low-frequency brake noise in a braking operation.

Another object of the present invention is to provide an asbestos-free brake lining, which is excellent in fading resistance and wear resistance.

Still another object of the present invention is to provide an asbestos-free brake lining capable of preventing ignition in a braking operation and excess wear of a counter-rotor, which have been problematically caused in a conventional semi-metallic lining.

The aforementioned objects are solved by the characterizing features of the independent claims. Preferred embodiments of the invention are characterized by the features of the dependent claims.

An asbestos-free brake lining according to the present invention contains a base material, an auxiliary material and a filler, and is obtained by molding with a binder

In one aspect of the present invention, the base material contains 2 to 30 volume percent of copper-containing fiber with respect to the brake lining. The auxiliary material contains 1 to 30 volume percent of talc with respect to the brake lining.

In another aspect of the present invention, the base material contains 2 to 15 volume percent of copper-containing fiber with respect to the brake lining. The auxiliary material contains 2 to 25 volume percent of talc with respect to the brake lining. The brake lining has a static friction coefficient $\mu s$ of 0.32 to 0.40. The ratio $\mu s/\mu d$ of the static friction coefficient $\mu s$ to a dynamic friction coefficient $\mu d$ of the brake lining is 1.03 to 1.14.

In still another aspect of the present invention, the base material contains at least 3 volume percent of aramid fiber with respect to the brake lining. The auxiliary material contains not more than 15 volume percent of talc with respect to the brake lining. The brake lining contains at least 1 volume percent of copper-containing fiber and/or copper-containing powder with respect to the brake lining. The content of the copper-containing fiber is less than 2 volume percent with respect to the brake lining.

In a further aspect of the present invention, the base material contains 3 to 10 volume percent of aramid fiber with respect to the brake lining. The auxiliary material contains 3 to 15 volume percent of talc with respect to the brake lining. The brake lining contains 1 to 4 volume percent of copper-containing fiber and/or copper-containing powder with respect to the brake lining. The content of the copper-containing fiber is 1 to 2 volume percent with respect to the brake lining. The brake lining has a static friction coefficient $\mu$s of 0.32 to 0.40. The ratio $\mu$s/$\mu$d of the static friction coefficient $\mu$s to a dynamic friction coefficient $\mu$d of the brake lining is 1.03 to 1.14.

The term "asbestos-free" means that no asbestos is contained. The term "copper-containing fiber" indicates fiber which contains copper, i.e., copper fiber and/or copper alloy fiber, in more concrete terms. The term "copper-containing powder" indicates powder which contains copper, i.e., copper powder and/or copper alloy powder, in more concrete terms.

It is generally said that a brake noise is caused by the so-called stick-slip phenomenon, which takes place between a brake lining and a counter-rotor. This stick-slip phenomenon is conceivably liable to occur in a brake lining which has a large static friction coefficient and a small dynamic friction coefficient, i.e., a brake lining which has a large ratio R ($\mu$s/$\mu$d) of the static friction coefficient to the dynamic friction coefficient. In this point of view, the inventors have calculated friction coefficient ratios R as to the conventional asbestos, low-steel and non-steel linings. As the result, it has been recognized that the asbestos lining, which hardly causes a low-frequency brake noise, has a small static friction coefficient, and hence its friction coefficient ratio R is reduced. It has also been recognized that the low-steel or non-steel lining, which easily causes a low-frequency brake noise, has a large static friction coefficient, and hence its friction coefficient ratio R is increased.

The inventive brake lining contains one or both of prescribed amounts of copper-containing fiber and copper-containing powder, as well as a prescribed amount of talc. The static friction coefficients of copper-containing fiber, copper-containing powder and talc are smaller than that of steel fiber. Therefore, the overall static friction coefficient of the inventive brake lining, which contains copper-containing fiber and/or copper-containing powder as well as talc, is reduced as compared with that of the conventional low-steel or non-steel lining. It is conceived that the friction coefficient ratio R of the overall brake lining is reduced as the result, to suppress occurrence of a low-frequency brake noise.

The inventive brake lining, which contains no asbestos, exerts no harmful influence on the human body and environment. Further, this brake lining suppresses occurrence of a low-frequency noise in a braking operation, to give no unpleasant feeling to the driver etc. In addition, the inventive brake lining is excellent in fading resistance and wear resistance.

The copper-containing fiber is high-priced. In one aspect of the present invention, therefore, the brake lining contains only a small amount of or absolutely no such high-priced copper-containing fiber, to reduce the cost.

The inventive brake lining effectively solves the problems of ignition in a braking operation and excess wear of the counter-rotor, which have been problematically caused in the conventional semi-metallic lining.

DESCRIPTION OF THE PREFERRED EMBODIMENT

In order to confirm effects of the present invention, the inventors have prepared samples of an asbestos lining and the inventive asbestos-free brake lining respectively, and made performance tests on these samples.

As to Example of the inventive asbestos-free brake lining, five samples were prepared in compounding ratios shown in Table 1. As to Comparative Example, four samples were prepared in compounding ratios shown in Table 2.

### Table 1  Compounding Ratio of Lining
### (Inventive Example)

| Sample No. | A-1 | A-2 | A-3 | A-4 | A-5 |
|---|---|---|---|---|---|
| Copper Fiber | 10 | | | | 3 |
| Brass Fiber | | 10 | | 15 | |
| Bronze Fiber | 5 | | 10 | | |
| Talc | 25 | 25 | 10 | 3 | 15 |
| Artificial Graphite Powder | 8 | 8 | 8 | 8 | 8 |
| Barium Sulfate | 12 | 12 | 17 | 12 | 12 |
| Aramid Fiber | 5 | 5 | 13 | 20 | 15 |
| Cashew Dust (=Cashew nut shell oil friction particles) | 10 | 15 | 17 | 17 | 12 |
| Steel Fiber | | | | | 10 |
| Phenolic Resin | 25 | 25 | 25 | 25 | 25 |

### Table 2  Compounding Ratio of Lining
### (Comparative Example)

| Sample No. | C-1 | C-2 | C-3 | C-4 |
|---|---|---|---|---|
| Copper Fiber | | 5 | | |
| Brass Fiber | | | 5 | |
| Copper Powder | | | | 5 |
| Talc | | | | 25 |
| Artificial Graphite Powder | 8 | 8 | 8 | 8 |
| Barium Sulfate | 22 | 22 | 27 | 12 |
| Aramid  Fiber | | 10 | 10 | 5 |
| Cashew Dust | 10 | 15 | 10 | 10 |
| Asbestos | 35 | | | |
| Steel Fiber | | | 15 | |
| Phenolic Resin | 25 | 25 | 25 | 25 |
| Rock Wool | | 10 | | |
| Glass Fiber | | 5 | | 10 |

Referring to Tables 1 and 2, the numerals denote values of volume percentage. The volume percentage values are multiplied by true density values of the respective raw materials, in terms of compounding weight ratios. The brass fiber as employed was in a composition ratio of 70 percent by weight of copper to 30 percent by weight of zinc. The bronze fiber was defined as PBC2C under JIS (Japanese Industrial Standards). The copper-containing fiber as employed was 60 μm in diameter and 3 mm in length.

Four additional samples were prepared in compounding ratios shown in Table 3, as Example of the inventive asbestos-free brake lining. Further, two additional samples were prepared in compounding ratios shown in Table 4, as Comparative Example.

Table 3　Compounding Ratio of Lining
(Inventive Example)

| Sample No. | A-6 | A-7 | A-8 | A-9 |
|---|---|---|---|---|
| Copper Powder and/or Copper-Containing Fiber | 1.2 | 1.0 | 3.0 | 3.5 |
| Aramid Fiber | 10 | 5 | 3 | 10 |
| Talc | 3 | 14.5 | 10 | 15 |
| Cashew Dust | 12 | 12 | 12 | 12 |
| Phenolic Resin | 25 | 24 | 25 | 25 |
| Rock Wool | 5 | | 8 | |
| Artificial Graphite | 7 | 6 | 8 | 6 |
| Barium Sulfate | Balance | Balance | Balance | Balance |

Table 4　Compounding Ratio of Lining
(Comparative Example)

| Sample No. | C-5 | C-6 |
|---|---|---|
| Copper Powder | | 3 |
| Talc | 21 | 17 |
| Artificial Graphite | 6 | 6 |
| Barium Sulfate | Balance | Balance |
| Aramid Fiber | 10 | 1 |
| Cashew Dust | 12 | 12 |
| Phenolic Resin | 25 | 25 |
| Rock Wool | 3 | 8 |

Referring to Tables 3 and 4, the numerals denote values of volume percentage. The volume percentage values are multiplied by true density values of the respective raw materials, in terms of compounding weight ratios. As to the item of "copper powder and/or copper-containing fiber" in Table 3, the samples Nos. A-6 and A-8 contained only copper powder, while the sample No. A-7 contained only copper fiber. The sample No. A-9 contained 1.5 volume percent of brass fiber and 2.0 volume percent of copper powder. The brass fiber as employed was in a composition ratio of 70 percent by weight of copper and 30 percent by weight of zinc. The copper-containing fiber was 60 μm in thickness and 3 mm in length.

Components of a brake lining are classified into a base material, an auxiliary material and a filler. Referring to Tables 1 to 4, copper fiber, brass fiber, bronze fiber, aramid fiber, glass fiber, steel fiber, rock wool and asbestos serve as base materials, and barium sulfate and cashew dust (cashew nut shell oil friction particles) serve as fillers, while copper powder, talc and artificial graphite powder serve as auxiliary materials. Phenolic resin serves as a binder.

The respective samples were prepared by mixing the raw materials in the compounding ratios shown in Tables 1 to 4, moulding the mixtures, and curing the same. The raw materials were mixed in an Irich mixer.

In the moulding process for each sample, prescribed amounts of raw materials were introduced into a mold, which was heated to a temperature of 160°C, and subjected to venting (degassing) at appropriate timing. A pressure was applied in a constant pressurizing system for 10 minutes. The pressure value was so properly selected that the as-formed brake lining was provided with pores of 10 % in calculation. The porosity of each sample was calculated by difference between true density and apparent density of the sample, as expressed in the following equation:

$$(true\ density) = \frac{(apparent\ density)}{(100 - porosity)/100}$$

True density values of the respective raw materials were measured in an inert gas replacement system such as a pycnometer, to calculate true density of the sample in accordance with a recipe. Apparent density was evaluated by the weight of the sample and volume measurement through outside dimensions.

The curing process was carried out at 230°C for 13 hours.

The 15 samples shown in Tables 1 to 4 were prepared through the aforementioned steps.

The as-formed samples were subjected to visual inspection for presence/absence of cracking. As the result, cracks were observed in the samples Nos. C-4, C-5 and C-6 according to Comparative Example. Although degassing timing in the thermoforming process was changed in various ways in order to eliminate such cracks, it was impossible to obtain effective linings.

Then, static and dynamic friction coefficients μs and μd were measured as to the remaining 12 samples, excluding the aforementioned samples Nos. C-4 to C-6. For the measurement of such values, the samples were pressed against counter-rotors, which were at temperatures of 50°C, with surface pressures of 10 Kg/cm². Table 5 shows the results.

Table 5 Friction Coefficients of lining

| Sample | | μs | Ratio (μs)/(μd) |
|---|---|---|---|
| Inventive Example | A-1 | 0.32 | 1.03 |
| | A-2 | 0.34 | 1.06 |
| | A-3 | 0.38 | 1.10 |
| | A-4 | 0.40 | 1.14 |
| | A-5 | 0.38 | 1.09 |
| | A-6 | 0.35 | 1.07 |
| | A-7 | 0.32 | 1.10 |
| | A-8 | 0.37 | 1.06 |
| | A-9 | 0.36 | 1.08 |
| Comparative Example | C-1 | 0.38 | 0.91 |
| | C-2 | 0.45 | 1.27 |
| | C-3 | 0.45 | 1.31 |

Table 5 shows the static friction coefficients μs and ratios R of the static friction coefficients μs to the dynamic friction coefficients μd. As understood from Table 5, the static friction coefficients μs and the ratios R of the samples Nos. A-1 to A-9 according to Inventive Example and the sample No. C-1 (asbestos lining) according to Comparative Example were smaller than those of the samples Nos. C-2 and C-3 according to Comparative Example. The sample No. C-2 is a conventional non-steel lining, and the sample No. C-3 is a conventional low-steel lining.

Thereafter the samples were applied to actual vehicles, and subjected to brake noise tests. Table 6 shows a braking schedule.

Table 6

| Item | 1. Burnish | 2. Braking Test |
|------|-----------|-----------------|
| Braking Conditions | Initial Velocity: 40Km/h<br><br>Terminal Velocity: 0.Km/h<br><br>Deceleration: 0.3G·<br><br>Number of Braking Operation: 200<br><br>Rotor Temperature Before Starting of Braking: 100°C | Initial Velocity:40Km/h<br><br>Terminal Velocity: 0.Km/h<br><br>Deceleration: 0.2G-0.6G<br><br>Number of Braking Operation: 140<br><br>Temperature Before Starting of Braking: 40-200°C |

(Note) Conditions of the braking tests were carried out in combination of each deceleration and each temperature before starting of braking.

Brake noises, which were caused during braking operations, were measured with accelerometers, and vibration was separated in a range of 20 Hz to 1 KHz through bandpass filters. The brake noises were counted upon generation of vibration in excess of a constant frequency, while such brake noises, which were caused during test braking, were separated into low-frequency noises and general brake noises, to calculate the rates of occurrence of the low-frequency brake noises. Table 7 shows the results.

Table 7

| | Sample | Rate of Occurrence of Low-Frequency Brake Noise |
|------|--------|-----------------|
| Inventive Example | A-1 | 0 % |
| | A-2 | 0 % |
| | A-3 | 1.3 % |
| | A-4 | 3.1 % |
| | A-5 | 2.0 % |
| | A-6 | 2.0 % |
| | A-7 | 1.5 % |
| | A-8 | 1.3 % |
| | A-9 | 0.5 % |
| Comparative Example | C-1 | 0 % |
| | C-2 | 25 % |
| | C-3 | 16.4 % |

Comparing Table 7 with Table 5, it is recognized that the rates R of friction coefficients of the brake linings substantially correlate to the rates of occurrence of low-frequency brake noises. Namely, it has been proved that the rates of occurrence of brake noises are reduced with reduction of the rates R of friction coefficients.

As shown in Table 7, the rates of brake noise occurrence of the inventive samples Nos. A-1 to A-9, which are equal or slightly inferior to that of the asbestos lining (sample No. C-1), are extremely lower than those of the conventional non-steel lining (sample No. C-2) and low-steel lining (sample No. C-3). Thus, it is clearly understood that the inventive samples are effective for reduction of low-frequency brake noises in braking operations.

Among the inventive samples, the samples Nos. A-4 and A-6 contained particularly smaller amounts of talc and exhibited larger rates of brake noise occurrence as compared with the remaining ones. On the other hand, the samples Nos. A-1, A-2 and A-9, which contained the largest amounts of talc among the inventive samples, exhibited lower rates of brake noise occurrence as compared with the remaining ones.

From the results of the aforementioned performance tests for the brake lining samples, the following facts have been ascertained:

As to Inventive Samples Nos. A-1 to A-5:

1) The amount of copper fiber or copper alloy fiber contained in the brake lining is preferably in a range of 2 to 30 volume percent, and more preferably, in a range of 2 to 15 volume percent. Strength of the brake lining is insufficient if the content of such copper-containing fiber is less than 2 volume percent, while the brake lining is excessively increased in thermal conductivity and manufacturing cost if the content exceeds 30 volume percent.

2) The amount of talc contained in the brake lining is preferably in a range of 1 to 30 volume percent, and more preferably, in a range of 2 to 25 volume percent. The effect of suppression of a low-frequency brake noise is reduced if the content of talc is less than 1 volume percent, while it is difficult to mould the brake lining if the content exceeds 30 volume percent.

As to Inventive Samples Nos. A-6 to A-9:

1) The brake lining must contain at least 1 volume percent of copper-containing fiber and/or copper-containing powder. If the content is less than 1 volume percent, thermal conductivity is reduced and the brake lining is deteriorated in fading resistance etc. The content of copper-containing fiber is less than 2 volume percent.

2) The brake lining must contain less than 15 volume percent of talc. If the content exceeds 15 volume percent, a compact prepared in a molding step is cracked, and strength of the brake lining is insufficient.

3) The brake lining must contain at least 3 volume percent of aramid fiber. If the content is less than 3 volume percent, strength of the brake lining is insufficient.

The copper-containing fiber used in Example of the present invention preferably has an aspect ratio of at least 20 and a fiber diameter of not more than 200 μm.

## Claims

1. An asbestos-free brake lining containing a base material, an auxiliary material, containing 1 to 30 volume percent of talc with respect to the brake lining and a filler and being molded with a binder, **characterized in that** said base material contains 2 to 30 volume percent of copper-containing fiber with respect to said brake lining.

2. A brake lining in accordance with claim 1,
   wherein
   the content of said copper-containing fiber with respect to said brake lining is 2 to 15 volume percent.

3. A brake lining in accordance with claim 1,
   wherein
   the content of said talc with respect to said brake lining is 2 to 25 volume percent.

4. A brake lining in accordance with claim 1,
   wherein
   said copper-containing fiber has an aspect ratio of at least 20 and a fiber diameter of not more than 200 μm.

5. A brake lining in accordance with claim 1,
   wherein
   said base material contains 5 to 20 volume percent of aramid fiber with respect to said brake lining.

6. An asbestos-free brake lining containing a base material, an auxiliary material containing 2 to 25 volume percent of talc with respect to said brake lining and a filler, and being molded with a binder, **characterized in that** said base material contains 2 to 15 volume percent of copper-containing fiber with respect to said brake lining,
that said brake lining has a static friction coefficient $\mu s$ of 0,32 to 0,40, and
that the ratio of $\mu s/\mu d$ of that static friction coefficient $\mu s$ to a dynamic friction coefficient $\mu d$ of the brake lining is 1,03 to 1,14.

7. An asbestos-free brake lining containing a base material, said base material containing at least 3 volume percent of aramid fiber with respect to the brake lining, an auxiliary material containing not more than 15 volume percent of talc with respect to the brake lining and a filler, and being molded with a binder, **characterized in that**
said brake lining contains at least 1 volume percent of copper-containing fiber and/or copper-containing powder with respect to the brake lining, and the content of said copper-containing fiber with respect to said brake lining is less than 2 volume percent.

8. A brake lining in accordance with claim 7,
wherein
the content of said aramid fiber with respect to said brake lining is 3 to 10 volume percent.

9. A brake lining in accordance with claim 7,
wherein
the content of said talc with respect to said brake lining is 3 to 15 volume percent.

10. A brake lining in accordance with claim 7,
wherein
the content of said copper-containing fiber and/or said copper-containing powder with respect to said brake lining is 1 to 4 volume percent.

11. A brake lining in accordance with claim 7,
wherein
the content of said copper-containing fiber with respect to said brake lining is 1 to 2 volume percent.

12. A brake lining in accordance with claim 7,
wherein
said base material contains 3 to 10 volume percent of aramid fiber with respect to said brake lining.

13. A brake lining in accordance with claim 7,
wherein
said copper-containing fiber has an aspect ratio of at least 20 and a fiber diameter of not more than 200 $\mu m$.

14. An asbestos-free brake lining containing a base material containing 3 to 10 volume percent of aramid fiber with respect to the brake lining, an auxiliary material containing 3 to 15 volume percent of talc with respect to the brake lining and the filler and being molded with a binder, **characterized in that** the brake lining contains 1 to 4 volume percent of copper-containing fiber and/or copper-containing powder with respect to the brake lining,
that the content of the copper-containing fiber with respect to the brake lining is 1 to 2 volume percent,
that the brake lining has a static friction coefficient $\mu s$ of 0,32 to 0,40, and
the ratio of $\mu s/\mu d$ of the static friction coefficient $\mu s$ to a dynamic friction coefficient $\mu d$ of the brake lining is 1,03 to 1,14.

**Patentansprüche**

1. Asbestfreier Bremsbelag, der aus einem Grundmaterial, einem Hilfsmaterial, das 1 bis 30 Vol.-% Talk bezogen auf den Bremsbelag enthält, und einem Füllstoff besteht und mit einem Bindemittel geformt ist, dadurch gekennzeichnet, daß das Grundmaterial 2 bis 30 Vol.-% kupferhaltige Fasern bezogen auf den Bremsbelag enthält.

2. Bremsbelag nach Anspruch 1, dadurch gekennzeichnet, daß der Gehalt an kupferhaltigen Fasern bezogen auf den Bremsbelag 2 bis 15 Vol.-% beträgt.

3. Bremsbelag nach Anspruch 1, dadurch gekennzeichnet, daß der Gehalt an Talk bezogen auf den Bremsbelag 2 bis 25 Vol.-% beträgt.

4. Bremsbelag nach Anspruch 1, dadurch gekennzeichnet, daß die kupferhaltige Faser eine Verhältniszahl von mindestens 20 und einen Faserdurchmesser von nicht mehr als 200 μm besitzt.

5. Bremsbelag nach Anspruch 1, dadurch gekennzeichnet, daß das Grundmaterial 5 bis 20 Vol.-% Aramidfasern bezogen auf den Bremsbelag enthält.

6. Asbestfreier Bremsbelag, der aus einem Grundmaterial, einem Hilfsmaterial, das 2 bis 25 Vol.-% Talk bezogen auf den Bremsbelag enthält, und einem Füllstoff besteht und mit einem Bindemittel geformt ist, dadurch gekennzeichnet, daß das Grundmaterial 2 bis 15 Vol.-% kupferhaltige Fasern bezogen auf den Bremsbelag enthält,
daß der Bremsbelag einen Haftreibungskoeffizienten μs von 0,32 bis 0,40 besitzt, und
daß das Verhältnis μs/μd dieses Haftreibungskoeffizienten μs zu einem Gleitreibungskoeffizienten μd des Bremsbelags 1,03 bis 1,14 beträgt.

7. Asbestfreier Bremsbelag, der aus einem Grundmaterial, das mindestens 3 Vol.-% Aramidfasern bezogen auf den Bremsbelag enthält, einem Hilfsmaterial, das nicht mehr als 15 Vol.-% Talk bezogen auf den Bremsbelag enthält, und einem Füllstoff besteht und mit einem Bindemittel geformt ist, dadurch gekennzeichnet, daß
der Bremsbelag mindestens 1 Vol.-% kupferhaltige Fasern und/oder kupferhaltiges Pulver bezogen auf den Bremsbelag enthält, und der Gehalt an kupferhaltigen Fasern bezogen auf den Bremsbelag weniger als 2 Vol.-% beträgt.

8. Bremsbelag nach Anspruch 7, dadurch gekennzeichnet, daß der Gehalt an Aramidfasern bezogen auf den Bremsbelag 3 bis 10 Vol.-% beträgt.

9. Bremsbelag nach Anspruch 7, dadurch gekennzeichnet, daß der Gehalt an Talk bezogen auf den Bremsbelag 3 bis 15 Vol.-% beträgt.

10. Bremsbelag nach Anspruch 7, dadurch gekennzeichnet, daß der Gehalt an kupferhaltigen Fasern und/oder kupferhaltigem Pulver bezogen auf den Bremsbelag 1 bis 4 Vol.-% beträgt.

11. Bremsbelag nach Anspruch 7, dadurch gekennzeichnet, daß der Gehalt an kupferhaltigen Fasern bezogen auf den Bremsbelag 1 bis 2 Vol.-% beträgt.

12. Bremsbelag nach Anspruch 7, dadurch gekennzeichnet, daß das Grundmaterial 3 bis 10 Vol.-% Aramidfasern bezogen auf den Bremsbelag enthält.

13. Bremsbelag nach Anspruch 7, dadurch gekennzeichnet, daß die kupferhaltige Faser eine Verhältniszahl von mindestens 20 und einen Faserdurchmesser von nicht mehr als 200 μm besitzt.

14. Asbestfreier Bremsbelag, der aus einem Grundmaterial, das 3 bis 10 Vol.-% Aramidfasern bezogen auf den Bremsbelag enthält, einem Hilfsmaterial, das 3 bis 15 Vol.- % Talk bezogen auf den Bremsbelag enthält, und einem Füllstoff besteht und mit einem Bindemittel geformt ist, dadurch gekennzeichnet, daß der Bremsbelag 1 bis 4 Vol.-% kupferhaltige Fasern und/oder kupferhaltiges Pulver bezogen auf den Bremsbelag enthält,
daß der Gehalt an kupferhaltigen Fasern bezogen auf den Bremsbelag 1 bis 2 Vol.-% beträgt,
daß der Bremsbelag einen Haftreibungskoeffizienten μs von 0,32 bis 0,40 besitzt, und
das Verhältnis μs/μd zwischen dem Haftreibungskoeffizienten μs und einem Gleitreibungskoeffizienten μd des Bremsbelags 1,03 bis 1,14 beträgt.

**Revendications**

1. Garniture de frein à asbeste libre contenant une matière de base, une matière auxiliaire contenant de 1 à 30 pour cent en volume de talc par rapport à la garniture de frein et un produit de remplissage, et moulée avec un liant, caractérisée en ce que ladite matière de base contient de 2 à 30 pour cent en volume de fibre contenant du cuivre par rapport à ladite garniture de frein.

2. Garniture de frein selon la revendication 1, dans laquelle
   le contenu de ladite fibre contenant du cuivre par rapport à ladite garniture de frein est de 2 à 15 pour cent en volume.

3. Garniture de frein selon la revendication 1, dans laquelle
   le contenu dudit talc par rapport à ladite garniture de frein est de 2 à 25 pour cent en volume.

4. Garniture de frein selon la revendication 1, dans laquelle
   ladite fibre contenant du cuivre a un rapport d'aspect d'au moins 20 et un diamètre de fibre qui n'est pas supérieur à 200 μm.

5. Garniture de frein selon la revendication 1, dans laquelle
   ladite matière de base contient de 5 à 20 pour cent en volume de fibre d'aramide par rapport à ladite garniture de frein.

6. Garniture de frein à asbeste libre contenant une matière de base, une matière auxiliaire contenant de 2 à 25 pour cent en volume de talc par rapport à ladite garniture de frein et un produit de remplissage, et moulée avec un liant, caractérisée en ce que ladite matière de base contient de 2 à 15 pour cent en volume de fibre contenant du cuivre par rapport à ladite garniture de frein,
   en ce que ladite garniture de frein a un coefficient de frottement statique $\mu s$ de 0,32 à 0,40, et
   en ce que ledit rapport $\mu s/\mu d$ de ce coefficient de frottement statique $\mu s$ par rapport au coefficient de frottement dynamique $\mu d$ de la garniture de frein est de 1,03 à 1,14.

7. Garniture de frein à asbeste libre contenant une matière de base, ladite matière de base contenant au moins 3 pour cent en volume de fibre d'aramide par rapport à la garniture de frein, une matière auxiliaire ne contenant pas plus de 15 pour cent en volume de talc par rapport à la garniture de frein et un produit de remplissage, et moulée avec un liant, caractérisée en ce que
   ladite garniture de frein contient au moins 1 pour cent en volume de fibre contenant du cuivre et/ou de poudre contenant du cuivre par rapport à la garniture de frein, et
   le contenu de ladite fibre contenant du cuivre par rapport à ladite garniture de frein est inférieur à 2 pour cent en volume.

8. Garniture de frein selon la revendication 7, dans laquelle
   le contenu de ladite fibre d'aramide par rapport à ladite garniture de frein est de 3 à 10 pour cent en volume.

9. Garniture de frein selon la revendication 7, dans laquelle
   le contenu dudit talc par rapport à ladite garniture de frein est de 3 à 15 pour cent en volume.

10. Garniture de frein selon la revendication 7, dans laquelle
    le contenu de ladite fibre contenant du cuivre et/ou de ladite poudre contenant du cuivre par rapport à ladite garniture de frein est de 1 à 4 pour cent en volume.

11. Garniture de frein selon la revendication 7, dans laquelle
    le contenu de ladite fibre contenant du cuivre par rapport à ladite garniture de frein est de 1 à 2 pour cent en volume.

12. Garniture de frein selon la revendication 7, dans laquelle
    ladite matière de base contient de 3 à 10 pour cent en volume de fibre d'aramide par rapport à ladite garniture de frein.

13. Garniture de frein selon la revendication 7, dans laquelle
    ladite fibre contenant du cuivre a un rapport d'aspect d'au moins 20 et un diamètre de fibre qui n'est pas supérieur à 200 μm.

14. Garniture de frein à asbeste libre contenant une matière de base contenant de 3 à 10 pour cent en volume de fibre d'aramide par rapport à la garniture de frein, une matière auxiliaire contenant de 3 à 15 pour cent en volume de talc par rapport à la garniture de frein et produit de remplissage, et moulée avec un liant, caractérisée en ce que la garniture de frein contient de 1 à 4 pour cent en volume de fibre contenant du cuivre et/ou de poudre contenant du cuivre par rapport à la garniture de frein,

en ce que le contenu de la fibre contenant du cuivre par rapport à ladite garniture de frein est de 1 à 2 pour cent en volume,

en ce que la garniture de frein a un coefficient de frottement statique $\mu$s de 0,32 à 0,40, et

ledit rapport $\mu$s/$\mu$d de ce coefficient de frottement statique $\mu$s par rapport au coefficient de frottement dynamique $\mu$d de la garniture de frein est de 1,03 à 1,14.